# EUROPÄISCHE PATENTSCHRIFT

(11) **EP 1 713 653 B1**
(45) Veröffentlichungstag und Bekanntmachung des Hinweises auf die Patenterteilung: **08.04.2009**
(21) Anmeldenummer: 05708522.7
(22) Anmeldetag: 31.01.2005
(51) Int. Cl.: B60H 1/00, F24F 13/04

(54) **EIN LUFTMISCHER FÜR EIN LÜFTUNGSSYSTEM**
AIR MIXER FOR A VENTILATION SYSTEM
MELANGEUR D'AIR POUR SYSTEME DE VENTILATION

(30) Priorität: 30.01.2004 US 768212
(43) Veröffentlichungstag der Anmeldung: 25.10.2006
(73) Patentinhaber: Behr America, Inc, Troy, Michigan 48083 (US)
(72) Erfinder: KASZYCKI, Ivan J., Azle, TX 70620 (US)
(74) Vertreter: Grauel, Andreas
(86) Internationale Anmeldenummer: PCT/IB2005/000233
(87) Internationale Veröffentlichungsnummer: WO 2005/075224

(56) Entgegenhaltungen:
- EP-A- 1 344 664
- DE-A1- 10 109 240
- DE-A1- 19 826 990
- US-A- 6 106 386

## Beschreibung

Die vorliegende Erfindung betrifft einen Luftmischer für ein Lüftungssystem, und im speziellen einen Luftmischer bestehend aus einem Gehäuse mit einer Regeltür zur Regelung von mindestens einem Einlassluftstrom, einer Modustür zur Regelung von mindestens einem Auslassluftstrom, und Luftkanälen, über welche die Luft durch den besagten Mischer geleitet wird.

Konventionelle Klimaanlagen, wie beispielsweise aus der DE 101 09 240 A bekannt, enthalten Luftmischer, die stromabwärts von einem Verdampfer und einem Heizungswärmetauscher angeordnet sind. Diese Luftmischer beinhalten typischerweise erste Einlassöffnungen für einen Kaltluftstrom, der durch einen Verdampfer geströmt ist, und zweite Einlassöffnungen für einen Heißluftstrom, der einen Heizungswärmetauscher passiert hat. An den Einlassöffnungen sind bewegliche Regeltüren zur Regelung des Einströmens kalter und heißer Luftströme und zur Einstellung des Mischungsverhältnisses der Einlassluftströme vorhanden. An den Auslassöffnungen sind bewegliche Modustüren angeordnet, um die Abgabe eines Gemischs aus heißer und kalter Luft zu regeln und das Gemisch aus heißer und kalter Luft, das aus der Einheit austritt, in verschiedenen Modi, die von einem Benutzer eingestellt werden können, zu verteilen.

Innerhalb des Luftmischers werden durch Türen, Klappern, Ablenkplatten und parallel geschichtete Leitbleche Luftkanäle zur Verfügung gestellt, die es ermöglichen, dass Luft durch den Luftmischer strömt. Die kalten und heißen Luftströme werden durch Passieren der Türen, Klappen, Ablenkplatten und Leitbleche in geschichtete Unterströme aufgeteilt, um die Vermischung zu begünstigen.

Es ist bekannt, dass die Effizienz der Vermischung der kalten und heißen Luftströme durch die Verwendung zusätzlicher Türen, Klappen, Ablenkplatten und Leitbleche, die innerhalb des Luftmischers angeordnet sind, verbessert werden kann. Die Anordnung zusätzlicher Vorrichtungen innerhalb des Luftmischers hat jedoch größere Gehäuse, eine kompliziertere Fertigung, sowie erhöhte Wartungs- und Herstellungskosten zur Folge. Darüber hinaus wird die Gesamteffizienz einer Mischeinheit durch zusätzliche Mischvowichtungen reduziert, da diese unter anderem Luftströme, die den Luftmischer passieren, behindern, wenn eine Vermischung nicht erforderlich ist.

### ZUSAMMENFASSUNG DER ERFINDUNG

Die vorliegende Erfindung stellt einen effizienten Luftmischer für ein Lüftungssystem mit einem kompakten Gehäuse zur Verfügung, der mit geringeren Kosten hergestellt werden kann. Gemäß Anspruch 1 der vorliegenden Erfindung besteht der Luftmischer aus einem Gehäuse mit einer Regeltür zur Regelung von mindestens einem Einlassluftstrom, einer Modustür zur Regelung von mindestens einem Auslassluftstrom, und Luftkanälen, über welche die Luft durch den besagten Mischer geleitet wird wobei das Luftkanalsystem an der Regeltur befestigt ist. Die Regeltür ist mit einem System von Luftkanälen verbunden, durch die Luft von einer Seite des besagten Mischers zur anderen geleitet wird.

. Diese Anordnung bietet den Vorteil, dass das mit der Regeltür verbundene Luftkanalsystem zusammen mit der Regeltür bewegt werden kann, so dass mindestens ein Einlassluftstrom nicht von dem Luftkanalsystem blockiert wird, wenn die Regeltür ein unbehindertes Strömen des mindestens einen Einlassstroms zur Verfügung stellt. In dieser Ausführungsform kann das Luftkanalsystem an der Rückseite der Regeltür befestigt sein, die sich stromabwärts von der Quelle des mindestens einen Einlassluftstroms befindet. Weiterhin kann das Luftkanalsystem so an der Regeltür befestigt sein, dass sich das Luftkanalsystem zusammen mit der Regeltür bewegt, während das Einströmen von mindestens einem Einlassluftstrom geregelt wird.

Das Luftkanalsystem kann durch verschiedene Verbindungen an der Regeltür befestigt sein. In einer bevorzugten Ausführungsform ist das Luftkanalsystem durch eine Schraubverbindung an der Regeltür befestigt. Die Befestigung des Luftkanalsystems kann auch durch Schweißen oder Heißverbinden erfolgen.

In einer weiteren bevorzugten Ausführungsform handelt es sich bei dem Luftkanalsystem um ein nicht lösbares Spritzgussteil, das an der Regeltür befestigt ist.

In einer weiteren Ausführungsform beinhaltet das Luftkanalsystem ungefähr parallel geschichtete Luftkanäle, die durch Luftrinnen zur Verfügung gestellt werden, welche mindestens einen Unterstrom von mindestens einem Einlassluftstrom in sekundäre geschichtete Unterströme aufteilen, die durch die Luftrinnen des Luftkanalsystems strömen.

In einer weiteren Ausführungsform beinhaltet das Luftkanalsystem ungefähr parallel geschichtete Luftkanäle, bestehend aus abwechselnd geschichteten ersten und zweiten Luftkanälen, die so angeordnet sind, dass sie erste und zweite Luftschichten mit unterschiedlicher Temperatur zuleiten, um die Vermischung zu fordern. Ein erster Luftkanal stellt einen Kanal für das Strömen von Luft in eine erste Richtung, und ein zweiter Luftkanal einen Kanal für das Strömen von Luft in eine zweite Richtung zur Verfügung, wobei die zweite Richtung der ersten Richtung entgegen gesetzt sein oder einen beliebigen geeigneten Winkel zur ersten Richtung aufweisen kann, der eine Vermischung der Luftströme begünstigt. Das Luftkanalsystem kann weiterhin auf eine solche Art und Weise angeordnet sein, dass heiße Luft durch die ersten Luftkanäle und kalte Luft durch die zweiten Luftkanäle strömt.

In einer weiteren bevorzugten Ausführungsform ist eine bewegliche Regeltür so angeordnet, dass sie zwei Einlassluftströme mit unterschiedlicher Temperatur regelt, vorzugsweise einen heißen Einlassluftstrom und einen kalten Einlassluftstrom. Zu diesem Zweck kann die Regeltür an den ersten und zweiten Einlassöffnungen angeordnet sein. Die Regeltür selbst kann in verschiedene Positionen gedreht werden, so dass ein vorbestimmter Teil eines Querschnitts der ersten und zweiten Einlassöffnungen blockiert werden kann.

Eine einzelne Regeltür ermöglicht somit die Regelung der heißen und kalten Luftströme durch das Schließen oder Öffnen vorbestimmter Teile der Querschnitte der Einlassöffnungen.

Zur Verfügung gestellt wird ein Luftmischer in einer Klimaanlage zur Erwärmung oder Abkühlung von Luft durch die Vermischung von Luftströmen. Mit Hilfe einer Regeltür wird das gewünschte Verhältnis zweier Einlassluftströme mit unterschiedlichen Temperaturen festgelegt, und eine Vermischung der Luftströme findet innerhalb des Luftmischers statt, wobei das Gemisch in verschiedenen Modi, die von einem Benutzer eingestellt werden können, über Modustüren aus der Einheit austritt.

Weitere Aufgaben, Merkmale und Vorteile der Erfindung werden aus der nun folgenden detaillierten Beschreibung der bevorzugten Ausführungsformen ersichtlich, wenn die Betrachtung in Verbindung mit den beigefügten gezeichneten Abbildungen erfolgt.

### KURZE BESCHREIBUNG DER ZEICHNUNGEN

Im folgenden werden Beispiele für Ausführungsformen der Erfindung unter Bezugnahme auf die Zeichnungen beschrieben, in welchen:
a. ABBILDUNG 1 eine konventionelle Lüftereinheit zeigt, in der eine Vermischung heißer und kalter Luftströme dargestellt ist;
b. ABBILDUNG 2 eine Lüftereinheit gemäß einer Ausführungsform der vorliegenden Erfindung zeigt;
c. Die ABBILDUNGEN 3a, 3b und 3c verschiedene perspektivische Darstellungen eines Luftkanalsystems gemäß einer Ausführungsform der vorliegenden Erfindung zeigen;
d. Die ABBILDUNGEN 4a, 4b, 4c, 4d und 4e verschiedene Positionen eines beweglichen Luftkanalsystems zusammen mit einer Temperaturregeltür für verschiedene Mischungsverhältnisse gemäß einer Ausführungsform der vorliegenden Erfindung zeigen.

### DETAILLIERTE BESCHREIBUNG VON BEVORZUGTEN AUSFÜHRUNGSFORMEN

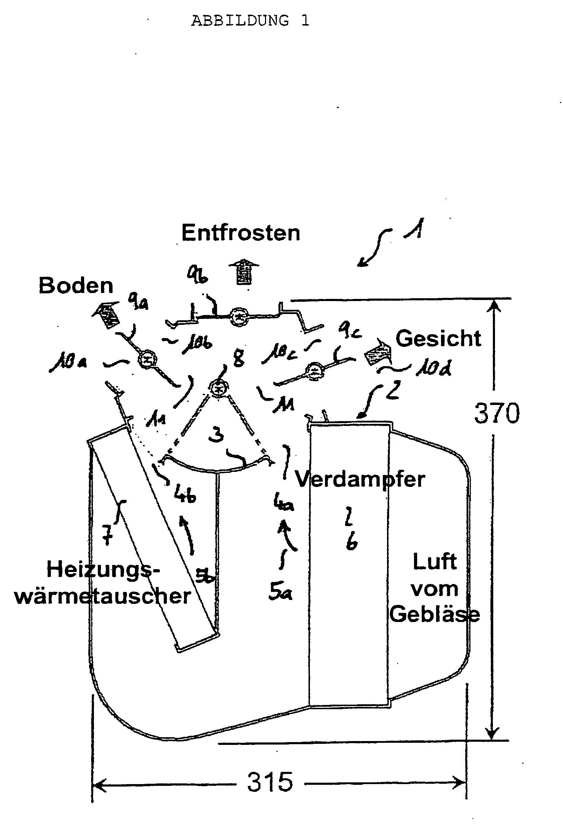

ABBILDUNG 1 zeigt die Schnittdarstellung einer Lüftereinheit 1 zur Verwendung für die Beheizung und/oder Kühlung des Innenraums eines Kraftfahrzeugs.

Die Lüftereinheit 1 enthält einen Luftmischer mit einem Gehäuse 2, das eine erste Einlassöffnung 4a für kalte Einlassluft und eine zweite Einlaßöffnung 4b für heiße Einlassluft zur Verfügung stellt. Das Gehäuse beinhaltet eine Temperaturregeltür 3 zur Regelung eines kalten Einlassluftstroms 5a und eines heißen Einlassluftstroms 5b, die beide durch das Gehäuse 2 strömen. Wie abgebildet strömt der kalte Einlassluftstrom 5a durch einen Verdampfer 6 und der heiße Einlassluftstrom 5b durch einen Heizungswärmetauscher 7.

Die Temperaturregeltür 3 ist in dem Gehäuse 2 drehbar auf Lagern 8 installiert und so angeordnet, dass über sie ein Mischungsverhältnis aus kalter und heißer Luft geregelt werden kann. Da sich die Regeltür 3 in verschiedene Positionen drehen lässt, ist es möglich, einen vorbestimmten Teil eines Querschnitts der ersten und zweiten Einlassöffnungen (4a und 4b) zu blockieren.

Weiterhin beinhaltet das Gehäuse 2 bewegliche Modustüren 9a, 9b und 9c, angeordnet an Auslassöffnungen 10a, 10b, 10c, 10d, wo ein Gemisch aus heißer und kalter Luft aus dem Gehäuse 2 in verschiedenen Modi austritt, die von einem Benutzer eingestellt werden können.

In einer Art und Weise, die Fachleuten bekannt ist, sind Türen, Klappen, Ablenkplatten und parallel geschichtete Leitbleche (nicht dargestellt) an dem Gehäuse 2 befestigt und so angeordnet, dass sie Luftkanäle 11 bilden, die es ermöglichen, dass Luft durch den Luftmischer strömt Die kalten und heißen Luftströme (5a und 5b) werden durch Passieren der Türen, Klappen, Ablenkplatten und Leitbleche kanalisiert und in geschichtete Unterströme unterteilt, um die Vermischung zu begünstigen.

Abbildung 1 zeigt ein vereinfachtes System. Bei frühere Ausführungen sind jedoch zusätzliche Türen, Klappen, Ablenkplatten und Leitbleche innerhalb der Gehäuse angeordnet, um die gewünschten Eigenschaften der Luftvermischung zu erzielen, was unerwünscht große Gehäuse zur Folge hat. Die vorliegende Erfindung nimmt sich dieses Problems an, wie nachfolgend in Verbindung mit bevorzugten Ausführungsformen detailliert beschrieben wird.

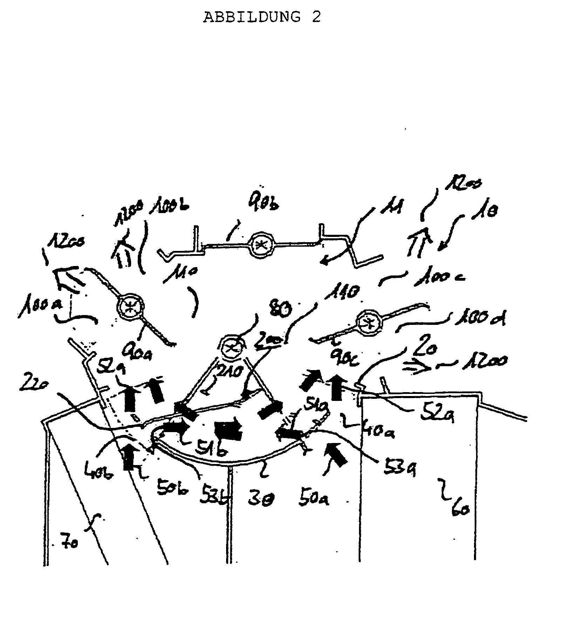

Abbildung 2 zeigt eine bevorzugte Ausführungsform einer Lüftereinheit der vorliegenden Erfindung in Schnittdarstellung.

Ein Luftfluss 50a strömt durch einen Verdampfer 60, wobei dieser Luftfluss für die vorliegenden Zwecke als "kalte" Luft bezeichnet wird. Der Begriff "kalt" ist für Luft, die nicht durch einen Verdampfer geströmt ist, relativ zu verstehen. Ein weiterer Luftfluss 50b strömt durch einen Heizungswärmetauscher 70, wobei dieser Luftfluss für die vorliegenden Zwecke als "heiße" Luft bezeichnet wird. Der Begriff "heiß" ist für Luft, die nicht durch einen Heizungswärmetauscher geströmt ist, relativ zu verstehen.

Die Lüftereinheit beinhaltet einen Luftmischer 11 mit einem Gehäuse 20, welches eine erste Einlassöffnung 40a für den Kaltluftstrom und eine zweite Einlassöffnung 40b für den Heißluftstrom zur Verfügung stellt.

Das Gehäuse 20 wiederum beinhaltet eine Temperaturregeltür 30, die den Kalduftstrom 50a in dem Gehäuse 20 durch eine erste Einlassöffnung 40a, sowie den Heißluftstrom 50b in dem Gehäuse 20 durch eine zweite Einlassöffnung 40b regelt.

In der Ausführungsform in ABBILDUNG 2 ist die Temperaturregeltür 30 vorzugsweise auf Lagern 80 in dem Gehäuse 20 installiert und so angeordnet, dass durch sie ein Mischungsverhältnis zwischen den kalten und warmen Luftströmen (50a und 50b) eingestellt werden kann, indem sie durch verschiedene Positionen gedreht wird. Bei Drehung der Regeltür 30 wird ein vorbestimmter Teil eines Querschnitts der ersten und zweiten Einlassöffnungen (40a und 40b) geöffnet oder blockiert.

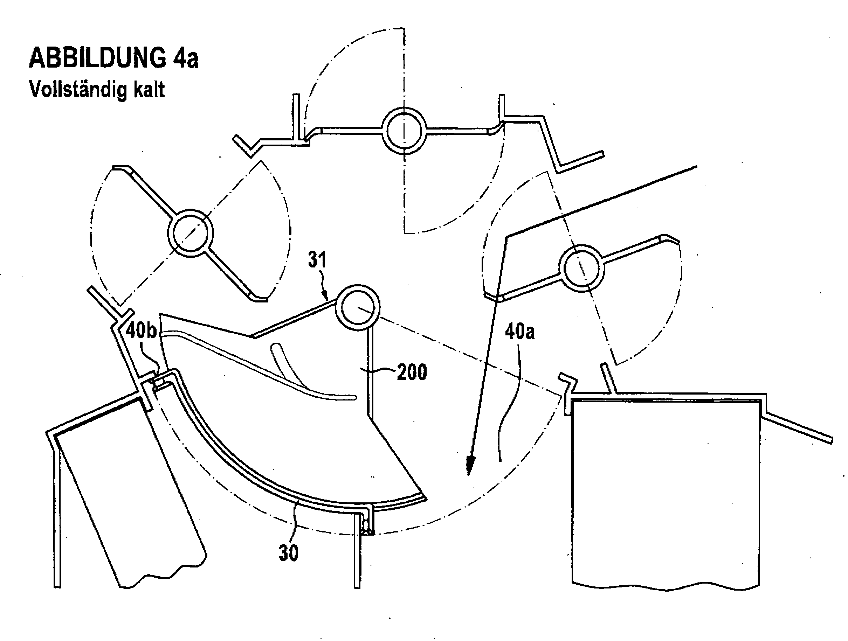

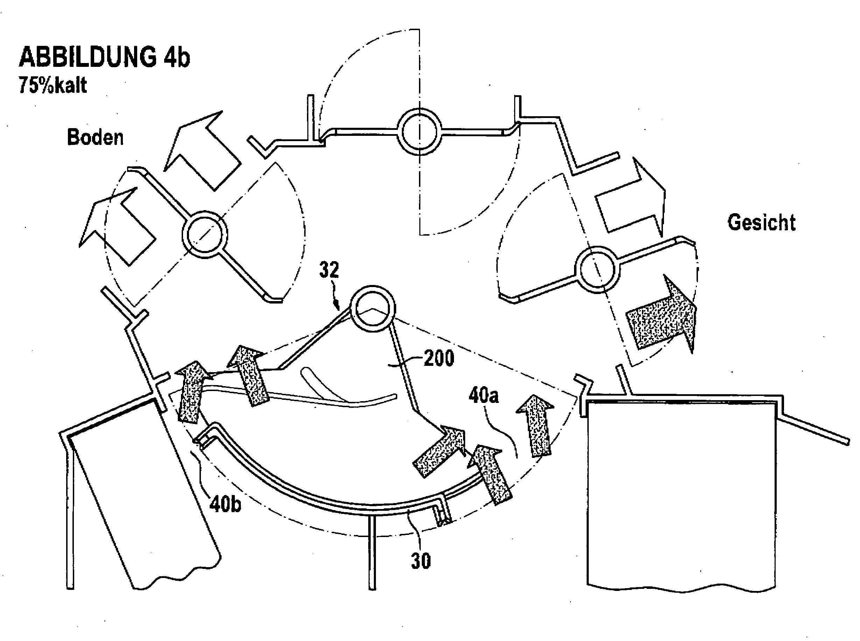

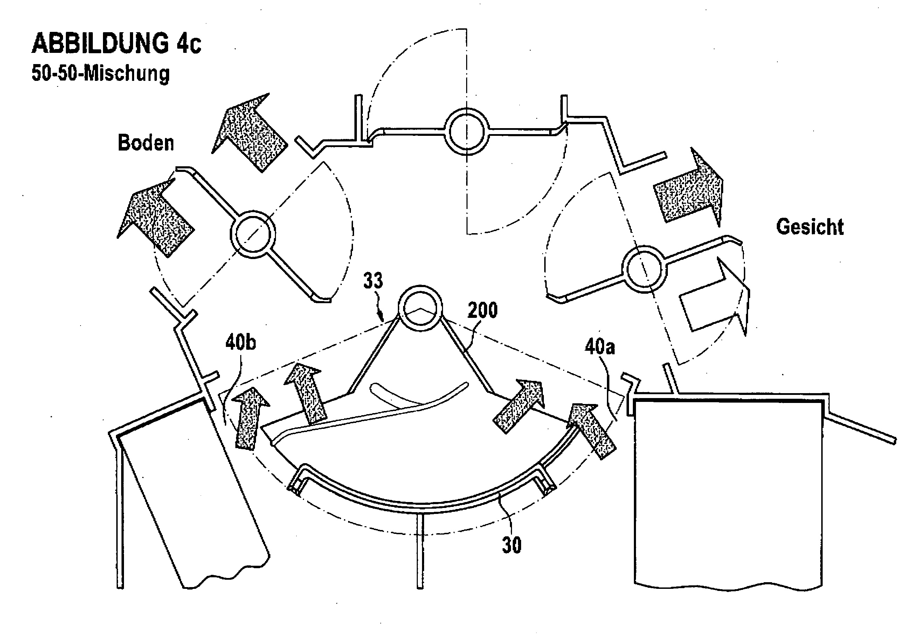

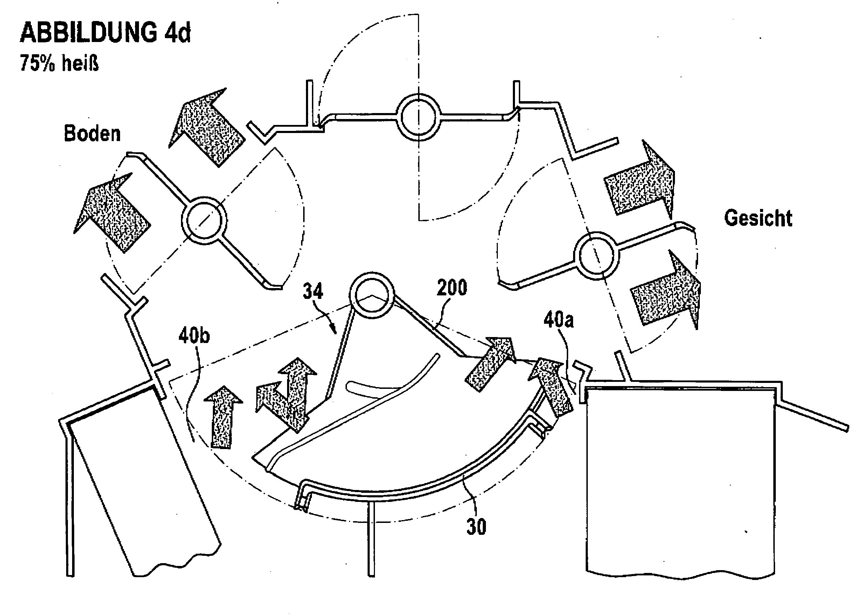

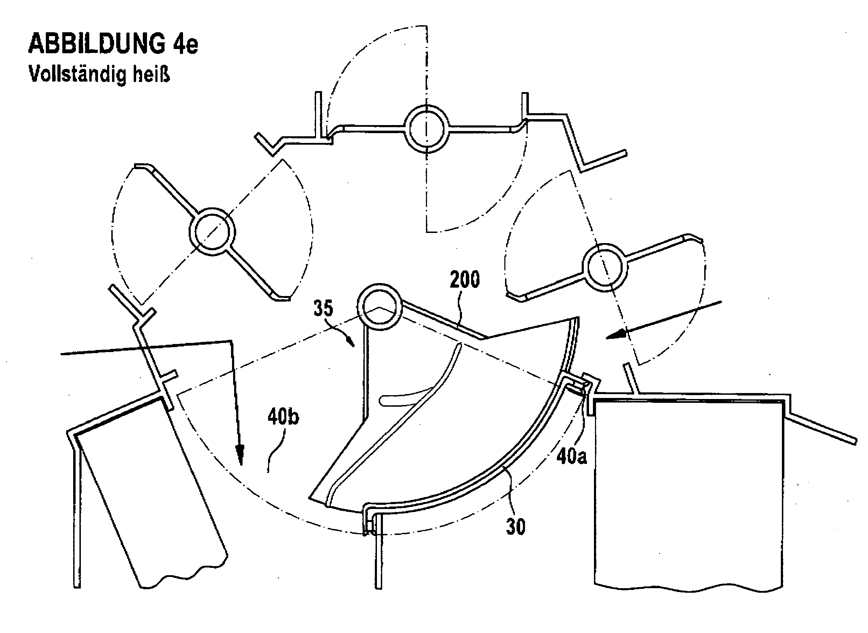

Die ABBILDUNGEN 4a bis e zeigen fünf verschiedene Positionen (31 bis 35) der Temperaturregeltür 30, die sich auf fünf entsprechende Mischungsverhältnisse zwischen kalter und heißer Luft beziehen. In ABBILDUNG 4a ist eine vollständig kalte Mischung dargestellt (100% kalt- 0% heiß); in ABBILDUNG 4b ist eine zu 75% kalte Mischung dargestellt (75% kalt - 25% heiß); ABBILDUNG 4c zeigt eine 50-50-Mischung (50% kalt - 50% heiß); ABBILDUNG 4d zeigt eine zu 75% heiße Mischung (25% kalt - 75% heiß); und in ABBILDUNG 4e ist eine vollständig heiße Mischung dargestellt (0% kalt - 100% heiß).

Das Gehäuse 20 des Luftmischers gemäß der vorliegenden Erfindung beinhaltet weiterhin Luftkanäle 110, die aus Türen, Klappen, Ablenkplatten und parallel geschichteten Leitblechen (nicht dargestellt) gebildet werden und durch die heiße und kalte Luftströme zu den Auslassöffnungen 100 geleitet werden, aus welchen Luft in den Innenraum des Kraftfahrzeugs einströmt.

An den Auslassöffnungen 100a, 100b, 100c und 100d, wo das Gemisch aus heißer und kalter Luft 1200 aus dem Gehäuse 20 in verschiedenen Modi austritt, die von einem Benutzer eingestellt werden können, sind bewegliche Modustüren 90a, 90b und 90c angeordnet.

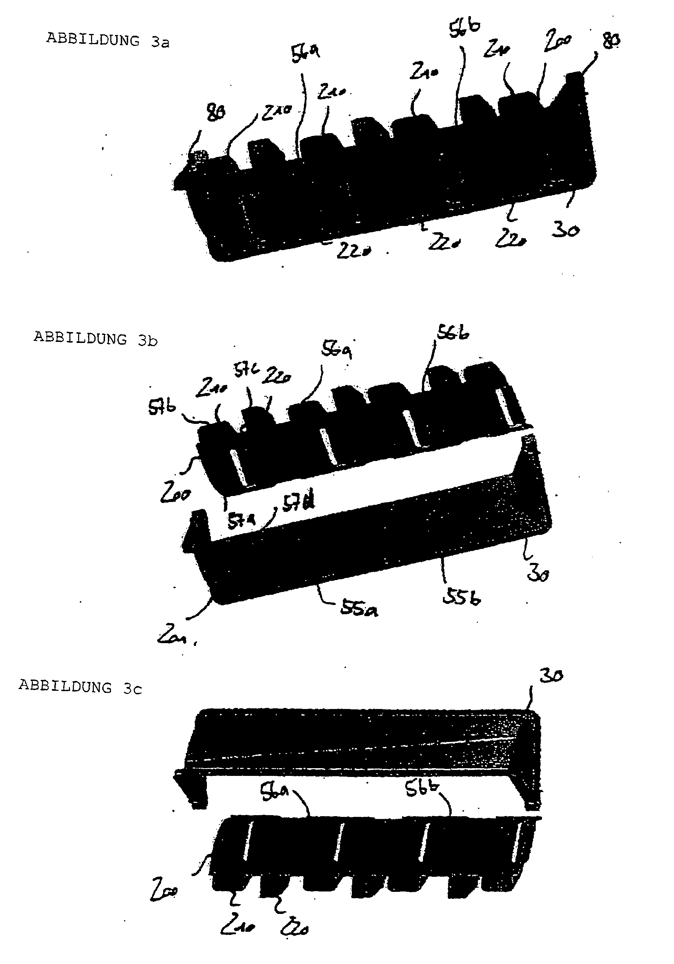

Unter Bezugnahme auf die ABBILDUNGEN 2 und 4a bis 4e ist zu sehen, dass sich die heißen und kalten Luftströme vor dem Austritt aus den Auslassöffnungen 100a bis 100 d vermischen. Gemäß dieser Ausführungsform der vorliegenden Erfindung erhöht ein Luftkanalsystem 200 (wie in den ABBILDUNGEN 3a, 3b und 3c dargestellt) die Effizienz des Mischprozesses heißer und kalter Luftströme. Dieses System 200 befindet sich in dem Gehäuse 20 und ist an einer rückwärtigen Seite 201 der Temperaturregeltür 30 befestigt. Die Temperaturregeltür 30 ist auf eine solche Art und Weise mit dem Luftkanalsystem 200 verbunden, dass beide zusammen gedreht werden können.

In dieser Ausführungsform besteht das Luftkanalsystem 200 aus abwechselnd geschichteten ersten Luftkanälen 210 und zweiten Luftkanälen 220, die in ungefähr parallel geschichteten Luftrinnen angeordnet sind. Kalte Luft strömt durch die ersten Luftkanäle 210, während heiße Luft durch die zweiten Luftkanäle 220 strömt.

Die ersten und zweiten Luftkanäle (210 und 220) sind auf eine solche Art und Weise angeordnet, dass die Kaltluftströme 56a durch die ersten Luftkanäle 21.0 in die im wesentlichen entgegen gesetzte Richtung strömen wie die Heißluftströme 56b, welche durch die zweiten Luftkanäle 220 strömen. Es muss jedoch darauf hingewiesen werden, dass der Winkel des einen Luftstroms relativ zu dem anderen in Abhängigkeit von den gewünschten Mischeigenschaften eingestellt werden kann.

Diese Anordnung von Luftkanälen begünstigt die Vermischung von kalter und heißer Luft, indem Luft von einer Seite des Luftmischers 11 zur anderen geleitet wird, wodurch dem Luftstrom Luftschichten mit entgegen gesetzter Temperatur zur Vermischung zugeführt werden.

Wenn der Kaltluftstrom 50a durch die erste Einlassöffnung 40a in das Gehäuse 20 einströmt und die Temperaturregeltür 30 passiert, wird er in Unterströme aufgeteilt, wobei ein erster Unterstrom 52a in eine nicht abgelenkte Richtung strömt und ein zweiter Unterstrom 53a in eine andere Richtung abgelenkt wird.

Der zweite Unterstrom 53a wird um ungefähr 90° abgelenkt und in noch weitere Unterströme aufgeteilt, welche zusammen den Kaltluftstrom 51a a bilden. Indem sie durch den ersten Luftkanal 210 0 strömen, werden die Kaltluftströme 51a von einer Seite des Mischers zur anderen geleitet (wie beispielsweise in der ABBILDUNG 2 dargestellt). Durch den Austritt aus dem Luftkanalsystem 200 führen die Kaltluftströme 51a der heißen Luft 52b Luftschichten mit einer anderen Temperatur zur Vermischung zu.

Das Einströmen der heißen Luft 50b in das Gehäuse 20 durch die zweite Einlassöffnung 40b erfolgt im wesentlichen seitenverkehrt. Nach Passieren der Temperaturregeltür 30 wird der Heißluftstrom 50b in Unterströme aufgeteilt, wobei ein erster Unterstrom 52b in eine nicht abgelenkte Richtung strömt und ein zweiter Unterstrom 53b in eine andere Richtung abgelenkt wird.

Dieser zweite Unterstrom 53b wird um ungefähr 90° abgelenkt und in noch weitere sekundäre Unterströme aufgeteilt, welche zusammen den Heißluftstrom 51b bilden, der durch die zweiten Luftkanäle 220 strömt. Indem sie durch den zweiten Luftkanal 220 strömen, werden die Heißluftströme 51b von einer Seite des Mischers zur anderen geleitet (wie beispielsweise in der ABBILDUNG 2 dargestellt). Durch den Austritt aus dem Luftkanalsystem 200 führen die Heißluftströme 5 1 b der kalten Luft 52a Luftschichten mit einer anderen Temperatur zur Vermischung zu.

Wie in den ABBILDUNGEN 3a bis 3c dargestellt handelt es sich bei dem Luftkanalsystem 200 einer bevorzugten Ausführungsform um ein Spritzgussteil, das über eine Schraubverbindung an der Regeltür 30 befestigt ist. Zwei Stifte (55a und 55b) greifen innerhalb der Struktur 201 in zwei entsprechende Aussparungen (56a und 56b) ein und dienen darüber hinaus zur Zentrierung der Verbindung.

Wie in den ABBILDUNGEN 3a bis 3c ebenfalls zu sehen ist, sind der erste und zweite Luftkanal (210 und 220) zur Ausrichtung auf die Form der Temperaturregeltür 30 leicht gebogen. Drei Wände 57a, 57b und 57c werden innerhalb des Luftkanalsystems 200 selbst gebildet; eine vierte Wand 57d befindet sich innerhalb der Temperaturregeltür 30, die mit dem Luftkanalsystem 200 verbunden ist.

Die ABBILDUNG 2 und die ABBILDUNGEN 4a bis 4e zeigen die miteinander verbundene Kombination des Luftkanalsystems 200 und der Temperaturregeltfu 30 als Schnittdarstellung. In dieser Schnittdarstellung betrachtet weist die Kombination etwa die Form eines Kreisabschnittes auf, der auf Lagern 80 in der Mitte eines Kreises drehbar gelagert ist. Das Mischungsverhältnis zwischen kalter und heißer Luft wird durch Drehen der Kombination entlang ihres Umfangs geregelt.

Die Regelung eines Mischungsverhältnisses wird somit mit einer einzelnen Tür erzielt, nämlich der Temperaturregeltur 30, wobei diese Regelung aus der Drehung der Temperaturregeltür an den Einlassöffnungen 40a, 40b resultiert.

Obwohl die vorliegende Erfindung unter Bezugnahme auf eine bevorzugte Ausführungsform beschrieben und dargestellt wurde, sollte verstanden werden, dass dies zu Darstellungszwecken geschehen ist und keine Einschränkung darstellt. Sinn und Umfang der vorliegenden Erfindung werden nur durch die beigefügten Ansprüche eingeschränkt.

## Patentansprüche

1. Ein Luftmischer (11) für ein Lüftungssystem, aufweisend ein Gehäuse (20) mit einer Regeltür (30) zur Regelung von mindestens einem Einlassluftstrom, einer Modustür (90a) zur Regelung von mindestens einem Auslassluftstrom, Luftkanälen (110), über welche die Luft durch den besagten Mischer geleitet wird, und einem Luftkanalsystem (200), durch das Luft von einer Seite des besagten Mischers (11) zu der anderen geleitet wird, wobei das besagte Luftkanalsystem (200) an der besagten Regeltür (30) befestigt ist.

2. Der Luftmischer gemäß Anspruch 1, worin das besagte Luftkanalsystem (200) so angeordnet ist, dass es an dar Rückseite (201) der Regeltür (30) befestigt wird, relativ zu einer Stromabwärtsrichtung des besagten mindestens einen Einlassluftstroms.

3. Der Luftmischer gemäß Anspruch 1, worin das besagte Luftkanalsystem (200) auf eine solche Art und Weise an der besagten Regeltür (30) befestigt ist, dass sich das besagte Luftkanalsystem (200) zusammen mit der besagten Regeltür (30) bewegt, während der besagte mindestens eine Einlassluftstrom geregelt wird.

4. Der Luftmischer gemäß Anspruch 1, worin das besagte Luftkanalsystem (200) durch eine Schraubverbindung an der besagten Regeltür (30) befestigt ist.

5. Der Luftmischer gemäß Anspruch 1, worin das besagte Luftkanalsystem (200) ein Spritzgussteil aufweist, das unlösbar an der besagten Regeltür (30) befestigt ist.

6. Der Luftmischer gemäß Anspruch 1, worin das besagte Luftkanalsystem (200) Luftkanäle aufweist, die so angeordnet sind, dass sie mindestens einen Unterstrom des besagten mindestens einen Einlassluftstroms in sekundäre geschichtete Unterströme aufteilen, welche durch die besagten Luftkanäle des besagten Luftkanalsystems strömen.

7. Der Luftmischer gemäß Anspruch 1, worin das besagte Luftkanalsystem (200) abwechselnd ' geschichtete erste und zweite Luftkanäle aufweist, die so angeordnet sind, dass sie erste und zweite Luftschichten mit unterschiedlicher Temperatur in die besagte Luft leiten.

8. Der Luftmischer gemäß Anspruch 7, worin die besagten ersten und zweiten Luftkanäle auf eine solche Art und Weise angeordnet sind, dass Luft, die durch die besagten ersten Luftkanäle geleitet wird, in ungefähr entgegen gesetzter Richtung strömt wie Luft, welche durch die besagten zweiten Luftkanäle strömt.

9. Der Luftmischer gemäß Anspruch 7, worin die besagten ersten und zweiten Luftkanäle im wesentlichen parallel geschichtete Luftrinnen aufweisen.

10. Der Luftmischer gemäß Anspruch 7, worin heiße Luft durch die besagten ersten Luftkanäle, und kalte Luft durch die besagten zweiten Luftkanäle strömt.

11. Der Luftmischer gemäß Anspruch 1, worin die besagte Regeltür (30) zwei Einlassluftströme mit unterschiedlichen Temperaturen regelt.

12. Der Luftmischer gemäß Anspruch 11, worin die besagte Regeltür (30) ein Mischungsverhältnis aus den besagten zwei Einlassluftströmen mit unterschiedlichen Temperaturen regelt

13. Der Luftmischer gemäß Anspruch 11, worin die besagten zwei Einlasgluftströme mit unterschiedlichen Temperaturen einen Kaltluftstrom und einen Heißluftstrom aufweisen.

14. Der Luftmischer gemäß Anspruch 1, verwendet in einer Klimaanlage für die Erwärmung oder Abkühlung von Luft durch die Vermischung von Luftströmen.

15. Ein Verfahren für die Vermischung von Luft in einem Lüftungssystem, aufweisend:
eine Leitung eines ersten Luftstroms in ein Gehäuse (20) an einem ersten Einlass (40a);
eine Leitung eines zweiten Luftstroms in das Gehäuse (20) an einem zweiten Einlass (40b);
und eine Zusammenführung des ersten und zweiten Luftstroms innerhalb des Gehäuses (20) an einer Öffnung, die durch eine drehbare Regeltür (30) bestimmt wird, welche einen an ihr befestigten Luftkanal als integralen Bestandteil enthält und worin der Drehwinkel der Regeltür (30) bewirkt, dass das Luftkanalsystem (200) eine vorbestimmte Menge des ersten Luftstroms in Richtung des zweiten Einlassen (40b), und eine vorbestimmte Menge des zweiten Luftstroms in Richtung des ersten Einlasses (40a) ablenkt.

16. Ein Luftmischer (11) in einem Lüftungssystem, aufweisend einen ersten Einlass (40a) für einen ersten Luftstrom, einen zweiten Einlass (40b) für einen zweiten Luftstrom, einen Auslass, und einen Kanal (110), platziert zwischen dem Einlass und Auslass, worin die Belegung von Luft durch den Kanal (110) über eine drehbare Regeltür (30) und einen integralen Luftkanal geregelt wird, welcher so an der Regeltür (30) befestigt ist, dass der Drehwinkel der Regeltür (30) bewirkt, dass eine vorbestimmte Luftmenge von dem ersten Einlass (40a) durch den Luftkanal zum zweiten Einlass (40b), und eine vorbestimmte Luftmenge von dem zweiten Einlass (40b) durch den Luftkanal zum ersten Einlass (40a) strömt.

## Claims

1. Air mixer (11) for a ventilation system, comprising a housing (20) with a control door (30) to control at least one inlet air stream, a mode door (90a) to control at least one outlet air stream, air passages (110) through which the air is carried through said mixer and an air duct system (200) through which air is carried from one side of said mixer (11) to the other, wherein said air duct system (200) is attached to said control door (30).

2. Air mixer according to claim 1, wherein said air duct system (200) is arranged such that it is attached to the back (201) of the control door (30) relative to a downstream direction of said at least one inlet air stream.

3. Air mixer according to claim 1, wherein said air duct system (200) is attached to said control door (30) such that said air duct system (200) moves together with said control door (30) while said at least one inlet air stream is controlled.

4. Air mixer according to claim 1, wherein said air duct system (200) is attached to said control door (30) by a screw connection.

5. Air mixer according to claim 1, wherein said air duct system (200) comprises an injection-moulded part non-releasably attached to said control door (30).

6. Air mixer according to claim 1, wherein said air duct system (200) comprises air ducts arranged such that they divide at least one sub-stream of said at least one inlet air stream into secondary layered sub-streams flowing through said air ducts of said air duct system.

7. Air mixer according to claim 1, wherein said air duct system (200) comprises alternating layered first and second air ducts arranged such that they feed first and second layers of different temperature air into said air.

8. Air mixer according to claim 7, wherein said first and second air ducts are arranged such that air passing through said first air ducts flows in an approximately opposite direction to air passing through said second air ducts.

9. Air mixer according to claim 7, wherein said first and second air ducts comprise substantially parallel-layered air ducts.

10. Air mixer according to claim 7, wherein hot air flows through said first air ducts and cold air flows through said second air ducts.

11. Air mixer according to claim 1, wherein said control door (30) controls two inlet air streams of different temperatures.

12. Air mixer according to claim 11, wherein said control door (30) controls a mixing ratio of said two inlet air streams of different temperatures.

13. Air mixer according to claim 11, wherein said two inlet air streams of different temperatures comprise a cold air stream and a hot air stream.

14. Air mixer according to claim 1, used in an air conditioning system for heating or cooling air by mixing air streams.

15. Method for mixing air in a ventilation system, comprising:
directing a first air stream into a housing (20) at a first inlet (40a);
directing a second air stream into a housing (20) at a second inlet (40b);
and converging the first and second air streams within the housing (20) at an opening determined by a rotatable control door (30) which includes an attached integral air duct and wherein the angle of rotation of the control door (30) causes the air duct system (200) to deflect a predetermined amount of the first air stream towards the second inlet (40b) and a predetermined amount of the second air stream towards the first inlet (40a).

16. Air mixer (11) in a ventilation system, comprising a first inlet (40a) for a first air stream, a second inlet (40b) for a second air stream, an outlet and a passage (110) placed between inlet and outlet, wherein the movement of air through the passage (110) is controlled by a rotatable control door (30) and an integral air duct attached to the control door (30) such that the angle of rotation of the control door (30) causes a predetermined amount of air to flow from the first inlet (40a) through the air passage to the second inlet (40b) and a predetermined amount of air to flow from the second inlet (40b) through the air passage to the first inlet (40a).

## Revendications

1. Mélangeur d'air (11) pour un système de ventilation, présentant un carter (20) comportant une porte de régulation (30) servant à la régulation d'au moins un flux d'air d'entrée, une porte de mode (90a) servant à la régulation d'au moins un flux d'air de sortie, des conduits d'air (110) par lesquels l'air est dirigé à travers ledit mélangeur, et un système de conduits d'air (200) à travers lequel l'air est dirigé d'un côté à l'autre dudit mélangeur d'air (11), où ledit système de conduits d'air (200) est fixé sur ladite porte de régulation (30).

2. Mélangeur d'air selon la revendication 1, dans lequel ledit système de conduits d'air (200) est disposé de manière telle, qu'il soit fixé sur la face arrière (201) de la porte de régulation (30), par rapport à une direction en aval dudit flux d'air d'entrée au moins au nombre de un.

3. Mélangeur d'air selon la revendication 1, dans lequel ledit système de conduits d'air (200) est fixé sur ladite porte de régulation (30), de manière telle que ledit système de conduits d'air (200) se déplace en même temps que ladite porte de régulation (30), tandis que ledit flux d'air d'entrée au moins au nombre de un est régulé.

4. Mélangeur d'air selon la revendication 1, dans lequel ledit système de conduits d'air (200) est fixé sur ladite porte de régulation (30), par un assemblage vissé.

5. Mélangeur d'air selon la revendication 1, dans lequel ledit système de conduits d'air (200) présente une pièce moulée par injection qui est fixée sur ladite porte de régulation (30), de façon non démontable.

6. Mélangeur d'air selon la revendication 1, dans lequel ledit système de conduits d'air (200) présente des conduits d'air qui sont disposés de manière telle, qu'ils subdivisent au moins un flux - de force moindre - dudit flux d'air d'entrée au moins au nombre de un, en flux secondaires superposés, de force moindre, qui s'écoulent à travers lesdits conduits d'air dudit système de conduits d'air.

7. Mélangeur d'air selon la revendication 1, dans lequel ledit système de conduits d'air (200) présente, alternativement, des premiers et des deuxièmes conduits d'air empilés qui sont disposés de manière telle, qu'ils dirigent, dans ledit air, des premières et des deuxièmes couches d'air ayant une température différente.

8. Mélangeur d'air selon la revendication 7, dans lequel lesdits premiers et deuxièmes conduits d'air sont disposés de manière telle, que de l'air, qui est dirigé à travers lesdits premiers conduits d'air, s'écoule dans une direction à peu près opposée à celle de l'air qui s'écoule à travers lesdits deuxièmes conduits d'air.

9. Mélangeur d'air selon la revendication 7, dans lequel lesdits premiers et deuxièmes conduits d'air présentent des goulottes d'air superposées de façon pratiquement parallèle.

10. Mélangeur d'air selon la revendication 7, dans lequel de l'air chaud s'écoule à travers lesdits premiers conduits d'air, de l'air froid s'écoulant à travers lesdits deuxièmes conduits d'air.

11. Mélangeur d'air selon la revendication 1, dans lequel ladite porte de régulation (30) régule deux flux d'air d'entrée ayant des températures différentes.

12. Mélangeur d'air selon la revendication 11, dans lequel ladite porte de régulation (30) régule une proportion de mélange provenant desdits deux flux d'air d'entrée ayant des températures différentes.

13. Mélangeur d'air selon la revendication 11, dans lequel lesdits deux flux d'air d'entrée ayant des températures différentes présentent un flux d'air froid et un flux d'air chaud.

14. Mélangeur d'air selon la revendication 1, utilisé dans un système de climatisation pour le chauffage ou le refroidissement de l'air, par le mélange de flux d'air.

15. Procédé permettant le mélange d'air dans un système de ventilation, présentant :
- une conduite d'un premier flux d'air dans un carter (20), au niveau d'une première entrée (40a) ;
- une conduite d'un deuxième flux d'air dans le carter (20), au niveau d'une deuxième entrée (40b) ;
- et une réunion du premier et du deuxième flux d'air à l'intérieur du carter (20),
au niveau d'une ouverture qui est déterminée par une porte de régulation rotative (30) qui comporte, comme composant intégré, un conduit d'air fixé sur la porte de régulation, et dans lequel l'angle de rotation de la porte de régulation (30) a pour effet que le système de conduits d'air (200) dévie une quantité prédéterminée du premier flux d'air en direction de la deuxième entrée (40b), et une quantité prédéterminée du deuxième flux d'air en direction de la première entrée (40a).

16. Mélangeur d'air (11) dans un système de ventilation, présentant une première entrée (40a) pour un premier flux d'air, une deuxième entrée (40b) pour un deuxième flux d'air, une sortie et un conduit d'air (110), placé entre l'entrée et la sortie, dans lequel le mouvement de l'air circulant à travers le conduit d'air (110) est réglé par une porte de régulation rotative (30) et par un conduit d'air intégré qui est fixé sur la porte de régulation (30), de manière telle que l'angle de rotation de la porte de régulation (30) ait pour effet qu'une quantité d'air prédéterminée provenant de la première entrée (40a) s'écoule, à travers le conduit d'air, vers la deuxième entrée (40b), et qu'une quantité d'air prédéterminée provenant de la deuxième entrée (40b) s'écoule, à travers le conduit d'air, vers la première entrée (40a).
